# EUROPÄISCHE PATENTSCHRIFT

(11) **EP 4 144 543 B1**
(45) Veröffentlichungstag und Bekanntmachung des Hinweises auf die Patenterteilung: **03.04.2024**
(21) Anmeldenummer: 22190453.5
(22) Anmeldetag: 16.08.2022
(51) Int. Cl.: B60C 23/04, G01P 3/48, B60C 11/24

(54) **VERFAHREN ZUM ERFASSEN EINER VERSCHLEISSRELEVANTEN BELASTUNG EINES FAHRZEUGRADES**
METHOD FOR DETECTING A WEAR-RELATED LOAD OF A VEHICLE WHEEL
PROCÉDÉ DE DÉTECTION D'UNE CHARGE RELATIVE À L'USURE D'UNE ROUE DE VÉHICULE

(30) Priorität: 01.09.2021 DE 102021122660
(43) Veröffentlichungstag der Anmeldung: 08.03.2023
(73) Patentinhaber: Huf Baolong Electronics Bretten GmbH, 75015 Bretten (DE)
(72) Erfinder: Wagner, Markus, 75038 Oberderdingen (DE); Vögeli, Patrick, 76356 Weingarten (DE)
(74) Vertreter: Twelmeier Mommer & Partner

(56) Entgegenhaltungen:
- DE-A1-102009 045 305
- US-A1- 2021 199 686

## Beschreibung

Die Erfindung betrifft ein Verfahren zum Erfassen einer verschleißrelevanten Belastung eines Fahrzeugrades mittels einer an dem Fahrzeugrad montierten Reifendrucküberwachungseinrichtung. Ein Verfahren mit den im Oberbegriff des Anspruchs 1 angegebenen Merkmalen ist aus DE 10 2009 045 305 A1 bekannt. Ein ähnliches Verfahren ist aus US 2021/0199686 A1 bekannt.

Der Verschleiß eines Fahrzeugrades hängt in erster Linie von der Anzahl der Radumdrehungen ab. In zweiter Linie spielen auch andere Faktoren, wie etwa Reifendruck und Fahrbahnbeschaffenheit eine Rolle. Da moderne Reifendrucküberwachungseinrichtungen einen oder mehrere Beschleunigungssensoren erhalten, kann mit ihnen die Drehfrequenz und damit die Anzahl der Radumdrehungen erfasst werden. Das Signal eines Beschleunigungssensors einer an einem Rad montierten Reifendrucküberwachungseinrichtung hat nämlich wegen der Erdbeschleunigung einen sinusförmigen Anteil, aus dem sich die Drehfrequenz ermitteln lässt.

Damit der sinusförmige Anteil des Signals des Beschleunigungssensors mit einer für eine Drehfrequenzbestimmung ausreichenden Genauigkeit erfasst werden kann, muss das Signal des Beschleunigungssensors mit einer ausreichenden Häufigkeit gemessen werden, typischer Weise etwa 10 Mal pro Radumdrehung. Je nach Reifendurchmesser dreht sich ein Rad bei typischen Fahrzeuggeschwindigkeiten etwa 10- bis 20-mal pro Sekunde. Um den sinusförmigen Signalanteil des Beschleunigungssensors für eine Frequenzbestimmung zuverlässig zu erfassen, müssen also über 100 Messwerte pro Sekunde erfasst und ausgewertet werden. Dies versucht einen erheblichen Energieaufwand, der insbesondere für batteriebetriebene Reifendrucküberwachungseinheiten problematisch ist.

Aufgabe der vorliegenden Erfindung ist es, einen Weg aufzuzeigen, wie mit weniger Energieaufwand mittels einer Reifendrucküberwachungseinheit die Anzahl der Radumdrehungen bzw. eine verschließrelevante Belastung erfasst werden kann.

Diese Aufgabe wird durch ein Verfahren mit den im Anspruch 1 angegebenen Merkmalen gelöst. Vorteilhafte Weiterbildungen der Erfindung sind Gegenstand von Unteransprüchen.

Die vorliegende Erfindung erspart den Aufwand fortlaufend aus einer Sinuswelle bzw. einem sinusförmigen Anteil eines Signals eines Beschleunigungssensors die Drehfrequenz des Fahrzeugrades zu bestimmen, also während der gesamten Fahrt die Zentrifugalbeschleunigung in kurzen Zeitabständen von etwa 5 ms bis 10 ms zu messen und den Signalverlauf auszuwerten. Im Prinzip genügt es erfindungsgemäß, wenn ein einziges Mal die Drehfrequenz aus einem sinusförmigen Signalverlauf bzw. einem sinusförmigen Anteil eines Signals eines Beschleunigungssensors der Reifendrucküberwachungseinheit bestimmt wird. Die Drehfrequenz ω ist nämlich mit der Zentrifugalkraft F durch die Gleichung F=mrω² verknüpft (r: Abstand des Beschleunigungssensors zur Drehachse; m: Sensormasse), so dass aus der Drehfrequenz ω und der Zentrifugalbeschleunigung Z_{acc}=rω²= 4π²r/T² (T: Periodendauer, also Zeit für eine Radumdrehung) ein Proportionalitätsfaktor bestimmt werden kann, der das Quadrat der Drehfrequenz mit der Zentrifugalbeschleunigung verknüpf. Wenn dieser Proportionalitätsfaktor, der im Idealfall den Abstand der Reifendrucküberwachungseinheit von der Drehachse angibt, bekannt ist, kann die momentane Drehfrequenz dann direkt aus Werten der momentanen Zentrifugalbeschleunigung berechnet werden.

An sich enthält die Zentrifugalbeschleunigung zwar einen sinusförmigen Anteil, der auf der Erdbeschleunigung beruht, da je nach Drehwinkelstellung des Rades die Erdbeschleunigung zur Zentrifugalkraft hinzukommt oder ihr entgegenwirkt, aber diese Abhängigkeit kann zum Zweck der Erfassung der Gesamtzahl der Radumdrehungen vernachlässigt werden. Einerseits weil dieser Anteil relativ klein ist, da die Zentrifugalbeschleunigung bei schneller Fahrt bis zu dem 500-fachen der Erdbeschleunigung g beträgt, andererseits weil sich der Einfluss der Erdbeschleunigung statistisch wegmittelt, da der Erdbeschleunigung ebenso oft die gemessene Zentrifugalbeschleunigung erhöht wie reduziert.

Nachdem der Proportionalitätsfaktor bestimmt wurde, genügt es bei einem erfindungsgemäßen Verfahren die Zentrifugalbeschleunigung in Zeitabständen zu messen, die so groß sind, dass sich die Zentrifugalbeschleunigung in ihnen nicht wesentlich ändert, beispielsweise in Zeitabständen von einigen Sekunden. Sobald der Proportionalitätsfaktor bestimmt wurde, genügen also Messungen in Zeitabständen von beispielsweise 5 Sekunden bis 15 Sekunden. Im Vergleich zu Messungen in Zeitabständen von etwa 5 Millisekunden bis 10 Millisekunden, wie sie erforderlich sind, um durch Auswertung eines sinusförmigen Signalverlaufs die Drehfrequenz eines Rades zu bestimmen, ist dies ein wesentlicher Vorteil der eine bedeutende Energieeinsparung ermöglicht.

Die Genauigkeit, mit der ein erfindungsgemäßes Verfahren eine verschleißrelevante Belastung eines Fahrzeugreifens ermitteln kann, hängt von der Genauigkeit ab, mit welcher der Proportionalitätsfaktor bestimmt wurde, der das Quadrat der Drehfrequenz mit der Zentrifugalbeschleunigung verknüpft. Um diese Genauigkeit zu erhöhen, kann der Proportionalitätsfaktor statistisch aus mehreren Serien von Messwerten des Beschleunigungssensors für verschiedene Zeitintervalle und jeweils für diese Zeitintervalle ermittelten Zentrifugalbeschleunigungswerten berechnet werden.

Beispielsweise kann ein Messwert von einem Beschleunigungssensor in ersten Zeitabständen von beispielsweise 5 ms bis 10 ms erfasst und dann aus 8 bis 12 solchen Werten ein Wert für die Drehfrequenz ermittelt werden. Die betreffenden ersten Zeitabstände bilden dann zusammen ein Zeitintervall, für das die so ermittelte Drehfrequenz gilt. In diesem Zeitintervall muss zudem noch die Zentrifugalbeschleunigung wenigstens einmal gemessen werden, so dass dann aus der ermittelten Drehfrequenz und der Zentrifugalbeschleunigung ein Proportionalitätsfaktor ermittelt werden kann. Indem die Bestimmung des Proportionalitätsfaktors für verschiedene Zeitintervalle vorgenommen wird, etwa für 8 bis 16 Zeitintervalle, kann durch Mittelwertbildung der einzelnen für den Proportionalitätsfaktor bestimmten Werte ein genauerer Wert für den Proportionalitätsfaktor bestimmt werden.

Erfindungsgemäß kann als Gesamtbelastungswert für einen Fahrzeugreifen im einfachsten Fall die Anzahl der Radumdrehungen verwendet werden, die aus der jeweils ermittelten Drehfrequenz und der zwischenzeitlich vergangenen Zeit ermittelt werden kann. Ein etwas genauerer Gesamtbelastungswert kann ermittelt werden, indem auch der Reifendruck berücksichtigt wird, beispielsweise indem Radumdrehungen bei zu hohem oder zu niedrigem Reifendruck ein erhöhtes Gewicht erhalten.

Wie bereits erwähnt, ist der Proportionalitätsfaktor, der das Quadrat der Drehfrequenz mit der Zentrifugalbeschleunigung verknüpft, für ein gegebenes Fahrzeugrad eine Konstante, so dass der Proportionalitätsfaktor an sich nur ein einziges Mal bestimmt werden muss. Dennoch kann der Proportionalitätsfaktor aber auch bei jedem Fahrtbeginn oder in vorgegebenen Zeitabständen neu bestimmt werden.

Der Gesamtbelastungswert kann in einer Reifendrucküberwachungseinheit selbst gespeichert werden oder in einer Zentraleinheit des Fahrzeugs, an welche die Reifendrucküberwachungseinheit ermittelte Daten sendet. Eine vorteilhafte Weiterbildung der Erfindung sieht dabei vor, dass der Gesamtbelastungswert auf null gesetzt wird, wenn der Reifendruck unter einen vorgegebenen Schwellenwert absinkt. Auf diese Weise kann verhindert werden, dass bei einem Reifenwechsel einem neuen Reifen ein Gesamtbelastungswert zugeordnet wird, der für einen alten Reifen ermittelt wurde. Dabei kann der Gesamtbelastungswert, bevor er auf null gesetzt wird, als Belastungswert gespeichert werden. Falls ein Reifen nach dem sein Druck unter den vorgegebenen Schwellenwert abgesunken ist, wieder aufgepumpt wurde, kann durch Berücksichtigung des zuvor gespeicherten Belastungswerts die Gesamtbelastung durch Aufsummieren des aktuellen Gesamtbelastungswerts und einem gespeicherten Belastungswert oder mehreren gespeicherten Belastungswerten, falls der Reifen ohne Austausch mehrmals aufgepumpt wurde.

Bei Reifendrucküberwachungssystemen, die zu Beginn einer Fahrt aus Signalen eines Beschleunigungssensors jeder Reifendrucküberwachungseinheit die jeweilige Drehfrequenz ermitteln, um durch deren Vorzeichen Reifendrucküberwachungseinheiten an rechten Rädern von Reifendrucküberwachungseinheiten an linken Rädern zu unterscheiden, und an dem absoluten Wert der Drehfrequenz, gelenkte Vorderräder von Hinterrädern zu unterscheiden, kann das erfindungsgemäße Verfahren praktisch ohne zusätzlichen Energieaufwand durchgeführt werden. Insbesondere kann bei derartigen Reifendrucküberwachungssystem der Proportionalitätsfaktor ohne wesentlichen Aufwand bei jedem Fahrbeginn neu bestimmt werden.

Weitere Einzelheiten und Vorteile der Erfindung werden im Folgenden an einem Ausführungsbeispiel der Erfindung unter Bezugnahme auf die beigefügte Zeichnung erläutert. Es zeigt:

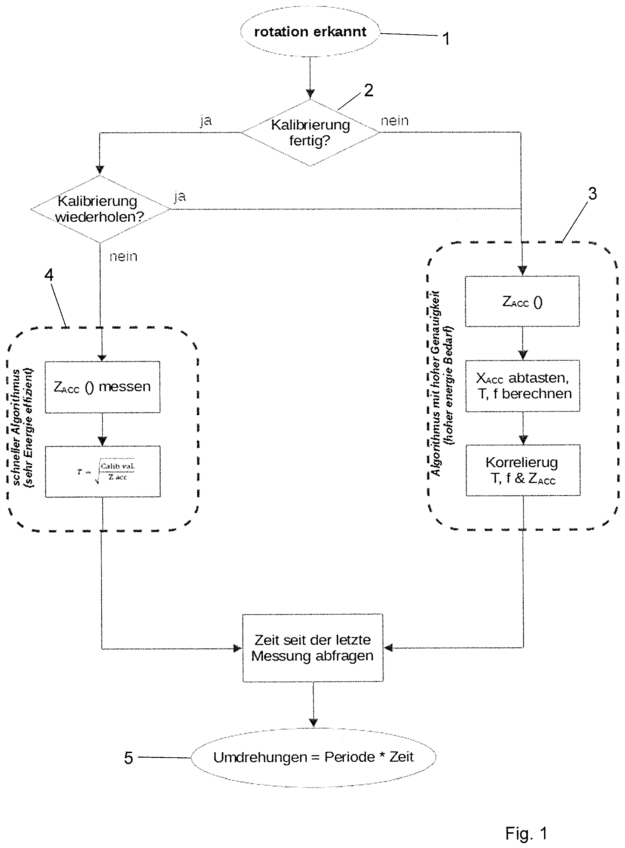

- Fig. 1: ein Ablaufdiagramm eines Verfahrens zum Erfassen einer verschleißrelevanten Belastung eines Fahrzeugrades;

In Schritt 1 des Verfahrens wird überprüft, ob das Fahrzeug fährt. Dies kann mit einem Beschleunigungssensor einer an einem Rad des Fahrzeugs montierten Reifendrucküberwachungseinrichtung geschehen. Wenn das Fahrzeug fährt, also eine Raddrehung detektiert wird, wird im Schritt 2 überprüft, ob ein gültiger Wert eines Proportionalitätsfaktors vorliegt, der das Quadrat der Drehfrequenz mit der Zentrifugalbeschleunigung verknüpft. Ein solcher Wert kann beispielsweise in einem Speicher einer Reifendrucküberwachungseinheit oder einer Zentraleinheit des Fahrzeugs, mit der die Reifendrucküberwachungseinheit kommuniziert, gespeichert sein, wobei ein Flag angeben kann, ob der gespeicherte Wert gültig ist.

Falls kein gültiger Wert des Proportionalitätsfaktors vorliegt, wird der Proportionalitätsfaktor in Schritt 3 ermittelt. Dazu wird mit einem Beschleunigungssensor der Reifendrucküberwachungseinrichtung in ersten Zeitabständen von beispielsweise 5 ms bis 10 ms ein Beschleunigungswert ermittelt wird, beispielsweise ein Wert der Tangentialbeschleunigung X_{acc} oder der Zentrifugalbeschleunigung Z_{acc}. Auf diese Weise wird für ein Zeitintervall, das aus mehreren ersten Zeitabständen gebildet ist, eine Reihe von Messwerten eines Beschleunigungssensors ermittelt, beispielsweise von 8 bis 50 Messwerten. Diese Messwerte zeigen einen sinusförmigen Verlauf bzw. ihr Verlauf hat einen sinusförmigen Anteil. Durch Auswertung der Reihe von Messwerte kann somit die Frequenz f des sinusförmigen Verlaufs bzw. sinusförmigen Anteil des Signalverlaufs gemessen werden. Beispielsweise indem der Signalverlauf durch Tiefpassfilterung geglättet und dann die Anzahl der Nulldurchgänge ermittelt wird.

Die so im Schritt 3 ermittelte Frequenz ist die Drehfrequenz des Rades in dem betreffenden Zeitintervall. In Schritt 3 wird während des Zeitintervalls wenigstens ein Wert der Zentrifugalbeschleunig gemessen. Bevorzugt wird die Zentrifugalbeschleunigung in dem Zeitintervall mehrmals gemessen und aus den Messwerten ein Mittelwert gebildet, der dann als Zentrifugalbeschleunigungswert für das Zeitintervall verwendet wird. Wenn die Drehfrequenz aus einer Serie von Werten der Zentrifugalbeschleunigung ermittelt wird, können diese Werte auch verwendet werden, um durch Mittelwertbildung einen Zentrifugalbeschleunigungswert für das Zeitintervall zu ermitteln. Wenn die Drehfrequenz aus einer Serie von Werten der Tangentialbeschleunigung ermittelt wird, können Werte der Zentrifugalbeschleunigung ebenfalls in ersten Zeitabständen gemessen und daraus ein Zentrifugalbeschleunigungswert für das Zeitintervall ermittelt werden.

Aus dem für das Zeitintervall ermittelten Wert für die Drehfrequenz und dem Zentrifugalbeschleunigungswert wird dann ein Proportionalitätsfaktor ermittelt, der das Quadrat der Drehfrequenz mit der Zentrifugalbeschleunigung verknüpft, beispielsweise indem der Wert für die Drehfrequenz durch den Zentrifugalbeschleunigungswert dividiert wird. Am Ende von Schritt 3 wird der ermittelte Proportionalitätsfaktor als gültiger Wert des Proportionalitätsfaktors gespeichert, beispielsweise in einem Speicher der Reifendrucküberwachungseinheit oder einer Zentraleinheit des Fahrzeugs.

Wenn im Schritt 2 bereits festgestellt wurde, dass ein gültiger Wert des Proportionalitätsfaktors vorliegt oder nachdem Schritt 3 durchlaufen wurde, wird das Verfahren mit Schritt 4 fortgesetzt.

Im Schritt 4 wird in zweiten Zeitabständen Δt₂, die größer als die ersten Zeitabstände Δt₁ sind, die Zentrifugalbeschleunigung gemessen und dann mit dem gespeicherten Proportionalitätsfaktor daraus ein Wert für die Drehfrequenz ω berechnet, beispielsweise indem ein Messwert der Zentrifugalbeschleunigung mit dem Proportionalitätsfaktor multipliziert wird. Aus der Drehfrequenz wird dann im Schritt 5 ein Belastungswert des Reifens berechnet. Im einfachsten Fall als Produkt von Frequenz f und zweitem Zeitabstand Δt₂. In den Belastungswert kann aber zusätzlich auch der Reifendruck einfließen, da Reifenumdrehungen mit zu hohem oder zu niedrigem Reifendruck zu erhöhtem Verschleiß führen. Am Ende von Schritt 4 wird der berechnete Belastungswert zu einem in der Reifendrucküberwachungseinheit oder einer Zentraleinheit des Fahrzeugs gespeicherten Gesamtbelastungswert hinzuaddiert.

Solange eine Raddrehung detektiert wird, wird Schritt 4 immer wieder erneut durchlaufen, so dass sich der Gesamtbelastungswert immer weiter erhöht und es ermöglicht, den Verschleißzustand des Reifen abzuschätzen. Bei der ersten Inbetriebnahme der Reifendrucküberwachungseinrichtung ist der Gesamtbelastungswert null und erhöht sich dann mit der Zeit.

Die zweiten Zeitabstände Δt₂ können wesentlich größer als die ersten Zeitabstände Δt₁, beispielsweise 100- bis 1000-mal so groß. Um den mit dem Verfahren verbundenen Energieaufwand gering zu halten, ist es vorteilhaft, wenn die zweiten Zeitabstände Δt₂ wenigstens 2 Sekunden betragen, beispielsweise 5 Sekunden bis 15 Sekunden betragen,

Eine Variante des vorstehend beschriebenen Verfahrens sieht vor, dass der Gesamtbelastungswert auf null gesetzt wird, wenn ein Abfall des Reifendrucks unter einen vorgegebenen Schwellenwert erkannt wird. Auf diese Weise kann verhindert werden, dass nach einem Reifenwechsel einem neuen Reifen der für einen zuvor verwendeten Reifen ermittelte Gesamtbelastungswert zugeordnet wird. Es ist aber auch möglich, dass der Gesamtbelastungswert bei jedem Reifenwechsel manuell durch ein Steuersignal zurückgesetzt wird.

Um die Zuverlässigkeit des Verfahren zu erhöhen ist möglich, eine Bestimmung des Proportionalitätsfaktors gemäß Schritt 3 mehrmals durchzuführen und dann in Schritt 4 einen Mittelwert der ermittelten Proportionalitätsfaktoren zu verwenden.

## Patentansprüche

1. Verfahren zum Erfassen einer verschleißrelevanten Belastung eines Fahrzeugrades mittels einer an dem Fahrzeugrad montierten Reifendrucküberwachungseinheit, die wenigstens einen Beschleunigungssensor enthält, wobei aus einer Serie von Messwerten des Beschleunigungssensors in ersten Zeitabständen eine Drehfrequenz des Fahrzeugrades für ein Zeitintervall ermittelt wird,
ein Zentrifugalbeschleunigungswert für das Zeitintervall ermittelt wird,
aus der Drehfrequenz und dem Zentrifugalbeschleunigungswert ein Proportionalitätsfaktor ermittelt wird, der das Quadrat der Drehfrequenz mit der Zentrifugalbeschleunigung verknüpft, **dadurch gekennzeichnet, dass** danach aus Messwerten der Zentrifugalbeschleunigung, die in zweiten Zeitabständen, die größer als die ersten Zeitabstände sind, ermittelt wurden, und dem Proportionalitätsfaktor fortlaufend eine Drehfrequenz des Rades berechnet wird, und
aus der Drehfrequenz und den zweiten Zeitabständen jeweils ein Belastungswert berechnet wird und diese Belastungswerte fortlaufend zu einer Gesamtbelastung aufaddiert werden.

2. Verfahren nach Anspruch 1, **dadurch gekennzeichnet, dass** die zweiten Zeitabstände wenigstens 100-mal so groß wie die ersten Zeitabstände sind.

3. Verfahren nach einem der vorstehenden Ansprüche, **dadurch gekennzeichnet, dass** die Drehfrequenz für das Zeitintervall aus 4 bis 100 Messwerten des Beschleunigungssensors ermittelt wird.

4. Verfahren nach einem der vorstehenden Ansprüche, **dadurch gekennzeichnet, dass** die ersten Zeitabstände weniger als 30 Millisekunden betragen, vorzugsweise weniger als 20 Millisekunden, besonders bevorzugt 5 bis 10 Millisekunden betragen.

5. Verfahren nach einem der vorstehenden Ansprüche, **dadurch gekennzeichnet, dass** die zweiten Zeitabstände wenigstens 2 Sekunden betragen, vorzugsweise wenigstens 5 Sekunden betragen, besonders bevorzugt 5 bis 15 Sekunden betragen.

6. Verfahren nach einem der vorstehenden Ansprüche, **dadurch gekennzeichnet, dass** die Drehfrequenz für das Zeitintervall aus Messwerten der Tangentialbeschleunigung ermittelt wird.

7. Verfahren nach einem der vorstehenden Ansprüche, **dadurch gekennzeichnet, dass** der Proportionalitätsfaktor statistisch aus mehreren Serien von Messwerten des Beschleunigungssensors für verschiedene Zeitintervalle und jeweils für diese Zeitintervalle ermittelten Zentrifugalbeschleunigungswerten berechnet wird.

8. Verfahren nach einem der vorstehenden Ansprüche, **dadurch gekennzeichnet, dass** der Belastungswert der Anzahl der in dem zweiten Zeitabstand erfolgten Radumdrehungen entspricht.

9. Verfahren nach einem der vorstehenden Ansprüche, **dadurch gekennzeichnet, dass** der Belastungswert aus der Anzahl der in dem zweiten Zeitabstand erfolgten Radumdrehungen und dem Reifendruck berechnet wird.

10. Verfahren nach einem der vorstehenden Ansprüche, **dadurch gekennzeichnet, dass** die Gesamtbelastung auf null gesetzt wird, wenn der Reifendruck einen vorgegebenen Schwellenwert unterschreitet.

11. Verfahren nach Anspruch 10, **dadurch gekennzeichnet, dass** die Gesamtbelastung, bevor sie auf null gesetzt wird, als Belastungswert gespeichert wird.

12. Reifendrucküberwachungseinrichtung mit einem Drucksensor, einem Beschleunigungssensor und einer Steuereinheit, **dadurch gekennzeichnet, dass** die Steuereinheit dafür eingerichtet ist, im Betrieb ein Verfahren nach einem der vorstehenden Ansprüche durchzuführen.

## Claims

1. Method for detecting a wear-relevant load on a vehicle wheel by means of a tyre pressure monitoring unit mounted on the vehicle wheel and containing at least one acceleration sensor, wherein
a rotational frequency of the vehicle wheel is determined for a time interval from
a series of measured values of the acceleration sensor at first time intervals,
a centrifugal acceleration value is determined for the time interval,
a proportionality factor is determined from the rotational frequency and centrifugal acceleration value, linking the square of the rotational frequency with the centrifugal acceleration, **characterized in that**
a rotational frequency of the wheel is then continuously calculated from measured values of the centrifugal acceleration, which have been determined at second time intervals that are greater than the first time intervals, and from the proportionality factor, and
a load value is respectively calculated from the rotational frequency and the second time intervals and these load values are continuously added up to an overall load.

2. Method according to Claim 1, **characterized in that** the second time intervals are at least 100 times as big as the first time intervals.

3. Method according to one of the preceding claims, **characterized in that** the rotational frequency is determined for the time interval from 4 to 100 measured values of the acceleration sensor.

4. Method according to one of the preceding claims, **characterized in that** the first time intervals are less than 30 milliseconds, preferably less than 20 milliseconds, particularly preferably 5 to 10 milliseconds.

5. Method according to one of the preceding claims, **characterized in that** the second time intervals are at least 2 seconds, preferably at least 5 seconds, particularly preferably 5 to 15 seconds.

6. Method according to one of the preceding claims, **characterized in that** the rotational frequency is determined for the time interval from measured values of the tangential acceleration.

7. Method according to one of the preceding claims, **characterized in that** the proportionality factor is statistically calculated from several series of measured values of the acceleration sensor for different time intervals and centrifugal acceleration values determined in each case for these time intervals.

8. Method according to one of the preceding claims, **characterized in that** the load value corresponds to the number of wheel revolutions made in the second time interval.

9. Method according to one of the preceding claims, **characterized in that** the load value is calculated from the number of wheel revolutions made in the second time interval and from the tyre pressure.

10. Method according to one of the preceding claims, **characterized in that** the overall load is set to zero if the tyre pressure falls below a predetermined threshold.

11. Method according to Claim 10, **characterized in that** the overall load, before it is set to zero, is stored as the load value.

12. Tyre pressure monitoring device having a pressure sensor, an acceleration sensor and a control unit, **characterized in that** the control device is designed to carry out a method according to one of the preceding claims in operation.

## Revendications

1. Procédé de détection d'une charge relative à l'usure d'une roue de véhicule au moyen d'une unité de surveillance de pression de pneu montée sur la roue de véhicule, qui contient au moins un capteur d'accélération, dans lequel une fréquence de rotation de la roue de véhicule est déterminée pour un laps de temps à partir d'une série de valeurs de mesure du capteur d'accélération à des premiers intervalles de temps,
une valeur d'accélération centrifuge est déterminée pour le laps de temps,
un facteur de proportionnalité est déterminé à partir de la fréquence de rotation et de la valeur d'accélération centrifuge, qui relie le carré de la fréquence de rotation à l'accélération centrifuge, **caractérisé en ce que**,
ensuite, on calcule une fréquence de rotation de la roue à partir des valeurs de mesure de l'accélération centrifuge obtenues à des seconds intervalles de temps supérieurs aux premiers intervalles de temps et du facteur de proportionnalité, et
on calcule une valeur de charge respectivement à partir de la fréquence de rotation et des seconds intervalles de temps et ces valeurs de charge sont additionnées en continu pour obtenir une charge totale.

2. Procédé selon la revendication 1, **caractérisé en ce que** les seconds intervalles de temps sont au moins 100 fois plus grands que les premiers intervalles de temps.

3. Procédé selon l'une des revendications précédentes, **caractérisé en ce que** la fréquence de rotation pour le laps de temps est déterminée à partir de 4 à 100 valeurs de mesure de l'accéléromètre.

4. Procédé selon l'une des revendications précédentes, **caractérisé en ce que** les premiers intervalles de temps sont inférieurs à 30 millisecondes, de préférence inférieurs à 20 millisecondes, de manière particulièrement préférée de 5 à 10 millisecondes.

5. Procédé selon l'une des revendications précédentes, **caractérisé en ce que** les seconds intervalles de temps sont d'au moins 2 secondes, de préférence d'au moins 5 secondes, de préférence encore de 5 à 15 secondes.

6. Procédé selon l'une des revendications précédentes, **caractérisé en ce que** la fréquence de rotation pour le laps de temps est déterminée à partir de valeurs de mesure de l'accélération tangentielle.

7. Procédé selon l'une des revendications précédentes, **caractérisé en ce que** le facteur de proportionnalité est calculé statistiquement à partir de plusieurs séries de valeurs de mesure de l'accéléromètre pour différents laps de temps et de valeurs d'accélération centrifuge déterminées respectivement pour ces laps de temps.

8. Procédé selon l'une des revendications précédentes, **caractérisé en ce que** la valeur de charge correspond au nombre de tours de roue effectués dans le second intervalle de temps.

9. Procédé selon l'une des revendications précédentes, **caractérisé en ce que** la valeur de charge est calculée à partir du nombre de tours de roue effectués dans le second intervalle de temps et de la pression de pneu.

10. Procédé selon l'une des revendications précédentes, **caractérisé en ce que** la charge totale est mise à zéro lorsque la pression de pneu est inférieure à une valeur seuil prédéterminée.

11. Procédé selon la revendication 10, **caractérisé en ce que** la charge totale est enregistrée comme valeur de charge avant d'être mise à zéro.

12. Dispositif de surveillance de pression de pneu comprenant un capteur de pression, un capteur d'accélération et une unité de commande, **caractérisé en ce que** l'unité de commande est conçue pour exécuter, en fonctionnement, un procédé selon l'une des revendications précédentes.
